# EUROPÄISCHE PATENTANMELDUNG

(11) **EP 3 037 789 A1**
(43) Veröffentlichungstag der Anmeldung: **29.06.2016**
(21) Anmeldenummer: 15199298.9
(22) Anmeldetag: 10.12.2015
(51) Int. Cl.: G01F 1/075, G01F 15/00

(54) **DURCHFLUSSMESSER, ROTOR UND WASSERFÜHRENDES HAUSHALTSGERÄT**

(30) Priorität: 18.12.2014 DE 102014226501
(71) Anmelder: BSH Hausgeräte GmbH, 81739 München (DE)
(72) Erfinder: ENGLISCH, Christian, 83324 Ruhpolding (DE); LOSER, Florian, 83022 Rosenheim (DE); MAYER, Gebhard, 83278 Traunstein (DE)

(57) **Zusammenfassung**

Offenbart ist ein Durchflussmesser eines wasserführenden Haushaltsgeräts zum Messen eines Fluiddurchflusses in einer Fluidleitung, mit zumindest abschnittsweise einen in der Fluidleitung anordbaren Rotor und eine außerhalb der Fluidleitung anordbaren Sensoreinrichtung zum Erfassen einer Drehbewegung einer Wirkfläche des Rotors, wobei die Sensoreinrichtung zumindest einen Schwingkreis aufweist, der auf einer Hauptelektronikplatine des wasserführenden Haushaltsgeräts angeordnet ist und wobei der Rotor nicht-magnetisch ausgeführt ist und zumindest eine elektrisch leitfähige Wirkfläche aufweist. Weiterhin ist ein Rotor für einen derartigen Durchflussmesser, sowie ein wasserführendes Haushaltsgerät offenbart.

## Beschreibung

Die Erfindung betrifft einen Durchflussmesser eines wasserführenden Haushaltsgeräts zum Messen eines Fluiddurchflusses in einer Fluidleitung, mit einem zumindest abschnittsweise in der Fluidleitung anordbaren Rotor und mit einer außerhalb der Fluidleitung anordbaren Sensoreinrichtung zum Erfassen einer Drehbewegung zumindest einer Wirkfläche des Rotors, einen Rotor für einen Durchflussmesser nach dem Oberbegriff des Patentanspruchs 8, sowie ein wasserführendes Haushaltsgerät mit einem Durchflussmesser nach dem Oberbegriff des Patentanspruchs 9.

Moderne wasserführende Haushaltsgeräte wie Durchlauferhitzer sind regelmäßig mit einem Durchflussmesser zur Durchflussmessung bzw. Volumenstrommessung ausgestattet. Bekannte Durchflussmesser arbeiten beispielsweise nach dem Hall-Prinzip. Sie haben einen in einer Zulaufleitung zumindest abschnittsweise anordbaren Rotor und einen außerhalb der Zulaufleitung anordbaren Hall-Sensor zur Erfassung einer Rotation des Rotors aufgrund des durch die Zulaufleitung einströmenden Wassers. Der Rotor kann hierzu ein Flügelrad sein, dessen Flügel Wirkflächen darstellen und hierzu aus einem Dauermagneten bestehen.

Wie in der DE 10 2006 027 477 A1 gezeigt, kann alternativ das Flügelrad aus einem Kunststoffmaterial bestehen und der Rotor zumindest einen Dauermagneten als Wirkfläche aufweisen. Problematisch bei derartigen Durchflussmessern ist, dass sich Bestandteile von den Dauermagneten lösen können und somit in das Trinkwasser gelangen. Zudem kann es zu Anhaftung von eisenhaltigen Schmutzpartikeln an dem Rotor kommen. Zudem zeichnen sich derartige Rotoren durch die Magneten durch ein hohes Gewicht aus, was sich nachteilig auf die Dynamik der Durchflussmesser auswirkt.

Weiterhin ist in der DE19725977A1 ein wasserführendes Haushaltsgerät mit einem Durchlaufsensor offenbart, welcher mit Hilfe eines am Durchlaufsensor angeordneten Sensorelements ein Sensorsignal erzeugt und dieses an eine Überwachungsschaltung des Haushaltgeräts leitet. Dabei sind die Überwachungsschaltung und das Sensorelement voneinander beabstandet, sodass die Sensorsignale erst über Kabel übermittelt werden müssen. Bei der Herstellung eines solchen Haushaltgeräts müssen elektronische Platinen für die Überwachungsschaltung und für zumindest das Sensorelement geätzt werden, sodass der Herstellungsaufwand durch die unabhängig voneinander angeordneten Bauteile hoch ist.

Aufgabe der Erfindung ist es, einen Durchflussmesser zum Messen eines Durchflusses eines Fluids in einer Fluidleitung zu schaffen, die die vorgenannten Nachteile beseitigt und deren Rotor eine hohe Dynamik aufweist. Des Weiteren ist es Aufgabe der Erfindung, einen Rotor für einen derartigen Durchflussmesser und ein wasserführendes Haushaltsgerät zu schaffen.

Diese Aufgabe wird gelöst durch einen Durchflussmesser mit den Merkmalen des Patentanspruch 1, durch einen Rotor mit den Merkmalen des Patentanspruchs 8 und durch ein wasserführendes Haushaltsgerät mit den Merkmalen des Patentanspruchs 9.

Ein erfindungsgemäßer Durchflussmesser eines wasserführenden Haushaltsgerät zum Messen eines Fluiddurchflusses in einer Fluidleitung, hat zumindest abschnittsweise einen in der Fluidleitung anordbaren Rotor und eine außerhalb der Fluidleitung anordbare Sensoreinrichtung zum Erfassen einer Drehbewegung einer Wirkfläche des Rotors. Erfindungsgemäß weist die Sensoreinrichtung zumindest einen Schwingkreis auf, der auf einer Hauptelektronikplatine des wasserführenden Haushaltsgeräts angeordnet ist, der Rotor ist nicht-magnetisch ausgeführt und weist zumindest eine elektrisch leitfähige Wirkfläche auf.

Bei einer Drehung des Rotors aufgrund des durch die Fluidleitung strömenden Fluids, beispielsweise Trinkwasser, werden durch den Schwingkreis Wirbelströme in der zumindest einen elektrisch leitenden Fläche induziert, die je nach Position des Rotors zu einer unterschiedlich starken Dämpfung des Schwingkreises führen. Zum Ausgleich des Dämpfungsverlustes wird dem Schwingkreis mehr Leistung zugeführt und die Drehung des Rotors erkannt, die dann wieder ein Maß für den Durchfluss bzw. den Volumenstrom ist. Dadurch, dass der Rotor aus einem nicht dauermagnetischen Material besteht, sondern bevorzugterweise aus lebensmittelechten Materialien, können keine gesundheitsbedenkliche Partikel in das Fluid gelangen. Da der Rotor nicht dauermagnetisch ist, weist er auch keine magnetische Anziehung auf, sodass ebenfalls die Gefahr einer Anhaftung durch eisenhaltige Schmutzpartikeln an dem Rotor unterbunden ist. Ferner wird durch die Ausführung des Rotors ohne Dauermagnet sein Gewicht erheblich reduziert, was sich positiv auf die Dynamik des Durchflussmessers auswirkt. Es wird ein schnelleres Ansprechverhalten und eine geringere Nachlaufzeit als bei herkömmlichen Durchflussmessern erreicht. Die elektrische Wirkfläche enthält beispielsweise Kupfer bzw. eine Kupferlegierung. Der Schwingkreis kann mit oder ohne Kondensator ausgeführt sein. Durch die Anordnung des Durchflussmessers im Bereich der Hauptelektronikplatine des Haushaltsgeräts entfällt eine separate Sensoreinrichtung. Die Sensoreinrichtung kann dabei auf die Hauptelektronikplatine des Haushaltsgeräts integriert werden, sodass die Anzahl der benötigten Komponenten im Haushaltsgerät reduziert wird. Da die Sensoreinrichtung auf der Hauptelektronikplatine aufgebracht werden kann, entfallen Sensorleitungen, -halterungen, -platine und Sensorgehäuse. Die Anzahl der Montageschritte wird hierbei ebenfalls reduziert und die Prozesssicherheit erhöht.

Bei einem Ausführungsbeispiel besteht der Rotor aus einem elektrisch isolierenden Material und die zumindest eine Wirkfläche ist eine elektrisch leitende Beschichtung des Rotors. Diese kann auf einen Rotorbereich begrenzt sein oder sich vollständig über den Rotor erstrecken. Der Rotor ist bevorzugterweise ein Spritzgussteil aus Kunststoff und zeichnet sich so neben einem geringen Gewicht durch eine technisch einfache und kostengünstige Herstellung aus. Die Beschichtung wird bevorzugterweise galvanisch, per Bedampfung, per Bedruckung oder durch ein vergleichendes Verfahren auf den Rotor aufgebracht. Hierdurch lässt sich die Beschichtung sehr dünn auftragen.

Bei einem alternativen Ausführungsbeispiel besteht der Rotor aus einem elektrisch leitenden Material. Zusätzlich kann der Rotor vollständig elektrisch leitend beschichtet sein. diesem Ausführungsbeispiel entfällt die Aufbringung einer bzw. der elektrisch leitenden Beschichtung. Der Rotor an sich kann beispielsweise aus einem Leichtmetall wie Aluminiumguss hergestellt werden.

Der Schwingkreis lässt sich energiesparend ausführen, wenn die zumindest eine Wirkfläche bezogen auf die Drehachse radial außen angeordnet ist. Hierdurch wird die zumindest eine Fläche in einem geringen Abstand an dem Schwingkreis vorbeigeführt, sodass die Ausbildung von Wirbelströmen genügt, die eine geringe Erstreckung im Raum aufweisen. Idealerweise beträgt ein Abstand zwischen dem Schwingkreis und der zumindest einen vorbeiführenden elektrisch leitenden Wirkfläche nahezu eine Wandstärke der Fluidleitung im Anbindungsbereich des Schwingkreises. Der Abstand setzt sich dabei aus der Wandstärke und einem spitzenseitigen Flügelspalt zwischen dem Rotor und der Fluidleitung zusammen, um eine Reibung des Rotors an der Fluidleitung zu verhindern.

Bevorzugterweise hat der Rotor zumindest zwei diametral angeordnete Flügelpaare, deren jeweils zwei Flügel über zumindest einen Ringbogen miteinander verbunden sind, der einen Bereich jeweils einer Wirkfläche bildet. Durch den jeweils zumindest einen Ringbogen erstrecken sich die Wirkflächen jeweils zumindest mit einem längeren Bereich in Drehrichtung. Gleichzeitig kann der Rotor weiterhin leichtgewichtig ausgeführt werden.

Bei einem bevorzugten Ausführungsbeispiel sind die Flügel jedes Flügelpaares endseitig über jeweils zwei Ringbögen miteinander verbunden und jedes Flügelpaar hat eine Wirkfläche, die sich jeweils über die zwei Ringbögen und Außenkanten der Flügel erstreckt. Durch die jeweils zwei Ringbögen in Kombination mit den jeweiligen Außenkanten wird pro Flügel quasi eine ringartige Wirkfläche geschaffen, die die Entstehung von Wirbelströmen begünstigt. Die ringartige Wirkfläche wirkt als elektrisch leitfähige Schleife und interagiert mit der Sensoreinrichtung.

Zur Reduzierung eines fertigungstechnischen Aufwandes können die Flügel jeweils zwei voneinander abgewandte parallele Flügelflächen haben. Aus fertigungstechnischer Sicht sind die Flügelflächen bevorzugterweise eben. Selbstverständlich sind jedoch auch gewölbte Flügelflächen, gebogene Flügelflächen, schraubenartige Flügelflächen und dergleichen möglich.

Ein erfindungsgemäßer Rotor für einen erfindungsgemäßen Durchflussmesser besteht aus einem eisenfreien Material und hat zumindest eine elektrisch leitfähige Fläche. Ein derartiger Rotor zeichnet sich durch eine hohe Dynamik und durch eine sehr geringe Wartung bzw. durch Wartungsfreiheit aus, da sich eisenhaltige Schmutzpartikel nicht an dem Rotor festsetzen können.

Ein erfindungsgemäßes wasserführendes Haushaltgerät hat eine Hauptelektronikplatine und einen erfindungsgemäßen Durchflussmesser. Das wasserführende Haushaltsgerät ist beispielsweise ein Durchlauf-erhitzer oder ein Warmwasserspeicher, der sich durch die Verwendung des erfindungsgemäßen Durchflussmessers die Bereitstellung von Trinkwasser in einer hohen Reinheit ermöglicht. Zudem erlaubt ein derartiger Durchlauferhitzer aufgrund der hohen Dynamik des Durchflussmessers eine präzise Einstellung einer Soll-Temperatur. Aufgrund des Verzichtes auf einen Hall-Sensor ist das wasserführende Haushaltgerät kostengünstig. Durch die Anordnung des Durchflussmessers im Bereich der Hauptelektronikplatine entfällt eine separate Sensoreinrichtung und die benötigten Befestigungs- und Zuleitungsmöglichkeiten, da die entsprechenden Komponenten auf der Hauptelektronikplatine des Haushaltsgeräts aufgebracht sind. Für die Herstellung des Haushaltsgeräts muss somit eine separate Platine weniger geätzt oder gefräst werden und damit entfallen auch verschiedene Montageschritte bei der Herstellung des Geräts, wodurch auch die Herstellung zeitlich verkürzt wird.

Die Erfindung eignet sich insbesondere zur Bereitstellung eines wasserführenden Haushaltsgerätes, insbesondere ein Durchlauferhitzer oder ein Getränkespender wie eine Kaffeemaschine bzw. ein Kaffeevollautomat und dergleichen, das die Bereitstellung von Trinkwasser und/oder eines Getränks in einer hohen Reinheit erlaubt, wartungsarm und kostengünstig ist.

Im Folgenden werden bevorzugte Ausführungsbeispiele der Erfindung anhand schematischer Darstellungen näher erläutert. Es zeigen:
- Figur 1: einen Längsschnitt durch einen Leitungsabschnitt eines erfindungsgemäßen wasserführenden Haushaltsgerätes mit einem ersten Ausführungsbeispiel eines erfindungsgemäßen Durchflussmessers,
- Figur 2: einen Schnitt durch den Durchflussmesser in dreidimensionaler Darstellung entlang seiner Rotordrehachse aus Figur 1,
- Figur 3: eine Draufsicht auf den erfindungsgemäßen Durchflussmesser,
- Figur 4: einen Schnitt durch den erfindungsgemäßen Durchflussmesser in zweidimensionaler Darstellung entlang seiner Rotordrehachse,
- Figur 5: eine Explosionsdarstellung des Durchflussmessers,
- Figuren 6 und 7: perspektivische Darstellungen des Durchflussmessers,
- Figuren 8 und 9: perspektivische Darstellungen eines Rotors des Durchflussmessers, und
- Figur 10: ein alternatives Ausführungsbeispiel des erfindungsgemäßen Durchflussmessers.

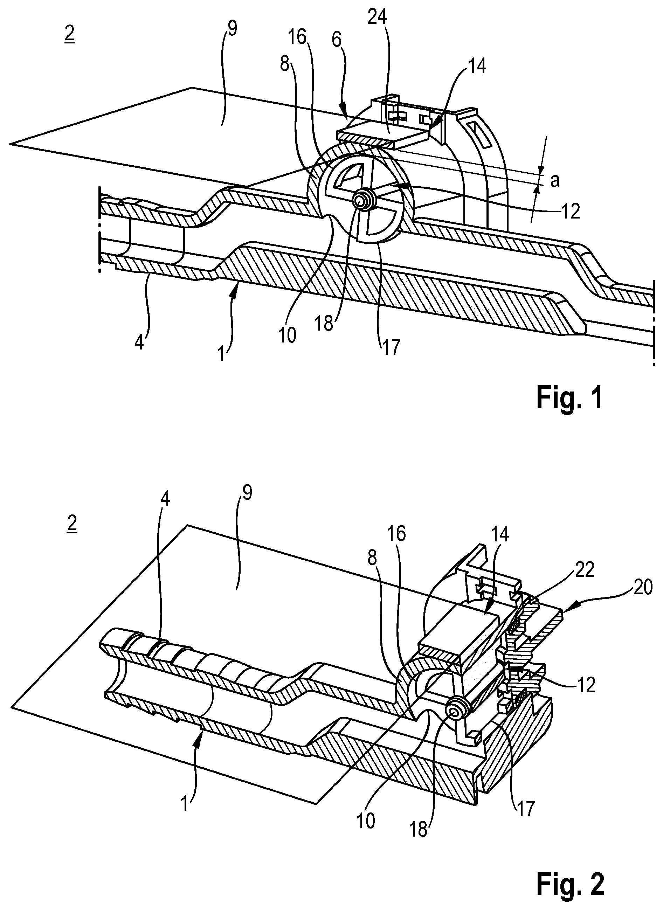

In den Figuren 1 und 2 ist ein Längsschnitt durch einen Leitungsabschnitt 1 eines wasserführenden Haushaltsgerätes 2 gezeigt. Das wasserführende Gerät ist beispielsweise ein Durchlauferhitzer und der Leitungsabschnitt 1 eine Zulaufleitung des Durchlauferhitzers. Das Haushaltsgerät 2 kann jedoch auch ein Getränkespender wie ein Kaffeevollautomat sein.

Der Leitungsabschnitt 1 hat ein Anschlussstück 4 zum Verbinden mit einer Wandinstallation und ein stromabwärts zum Anschlussstück 4 angeordneten Durchflussmesser 6. Der Durchflussmesser 6 ist in bzw. an einem zylinderförmigen Gehäuseabschnitt 8 des Leitungsabschnittes 1 angeordnet. Der Gehäuseabschnitt 8 erstreckt sich quer zum Leitungsabschnitt 1 und hat einen Innenraum, der über eine radiale Öffnung 10 mit dem Leitungsabschnitt 1 in Fluidverbindung steht.

Der Durchflussmesser 6 hat einen Rotor 12, der in dem Innenraum des Gehäuseabschnittes 2 angeordnet ist, und einen außerhalb des Gehäuseabschnittes 8 angeordnete Sensoreinrichtung 14.

Der Rotor 12 überdeckt die Öffnung 10 vollständig oder abschnittsweise und ist auf einer feststehenden Drehachse 18 des Rotors 12 quer zur Strömungsrichtung des Wassers in den Leitungsabschnitt 1 drehbar gelagert. Die Drehachse 18 ist in einen Lagerabschnitt 20 des Durchflussmessers 6 aufgenommen, der über einen Dichtring 22 den Innenraum zur Außenumgebung abdichtet.

Die Sensoreinrichtung 14 umfasst einen Schwingkreis mit einer entsprechenden Steuer-, Regel- und Auswerteelektronik. Die Steuer-, Regel- und Auswerteelektronik wird im Folgenden allgemein als Elektronik bezeichnet. Er dient zur Erfassung einer Rotation des Rotors 12, der hierzu in dem hier gezeigten Ausführungsbeispiel zwei zueinander entgegengesetzte Wirkflächen 16, 17 hat, die im Folgenden noch näher erläutert werden.

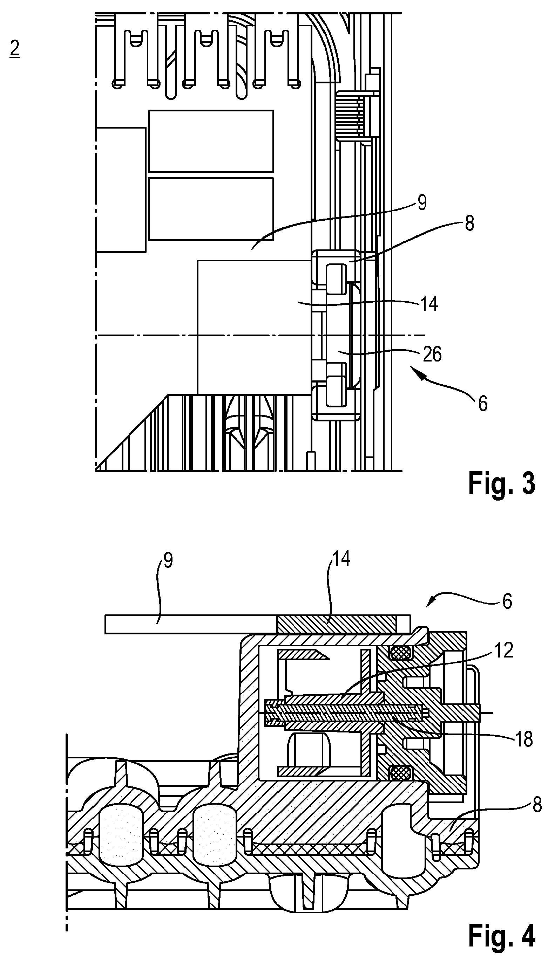

Der Schwingkreis weist in dem hier gezeigten Ausführungsbeispiel zumindest eine Spule, einen Kondensator und eine Stromversorgung auf. Selbstverständlich kann der Schwingkreis weitere elektrische Elemente aufweisen oder beispielsweise ohne einen Kondensator ausgeführt sein. Der Schwingkreis wird bevorzugterweise in MHz Frequenzbereich betrieben und ist in dem hier gezeigten Ausführungsbeispiel an einer planen Oberfläche 24 des Gehäuseabschnittes 8 angeordnet. Zumindest der Schwingkreis der Sensoreinrichtung 14 ist auf einer Hauptelektronikplatine 9 des Haushaltsgeräts 2 angeordnet. Die Sensoreinrichtung 14 ist somit zumindest teilsweise in die Hauptelektronikplatine 9 integriert. Die Spule des Schwingkreises wird bevorzugterweise durch Ätzen in die Hauptelektronikplatine 9 eingebracht. Die Hauptelektronikplatine 9 ist in dem Haushaltsgerät 2 verschraubt und weist beispielsweise Aussparungen zum Aufnehmen von Schrauben auf. Darüber hinaus weist die Hauptelektronikplatine 9 weitere elektronische Bauelemente beispielsweise zum Regeln des wasserführenden Haushaltsgeräts 2 auf. Einige der Elemente sind in Figur 3 schematisch dargestellt.

In den Figuren 3 und 4 ist die Integration der Sensoreinrichtung 14 in die Hauptelektronikplatine 9 in zweidimensionalen Darstellungen gezeigt. Figur 3 stellt dabei ein Draufsicht, und Figur 4 einen Schnitt entlang der Drehachse 18 des Rotors 12 dar. Wie in Figur 3 zu erkennen, ist die Sensoreinrichtung 14 mit ihrer Spule derart von übrigen Elementen der Hauptelektronikplatine 9 beabstandet, dass keine gegenseitige Beeinflussung stattfindet.

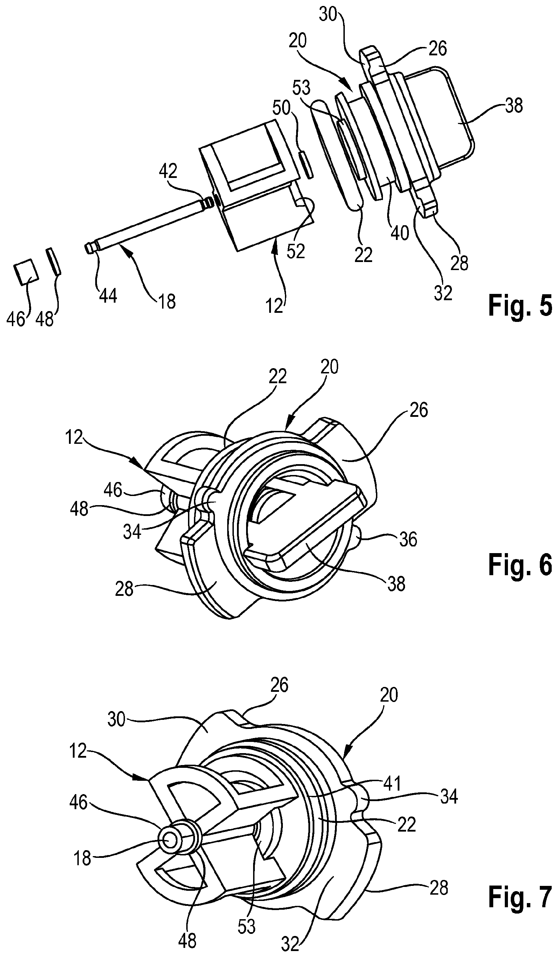

Gemäß den Figuren 5, 6 und 7 hat der Lagerabschnitt 20 zwei bezogen auf die Drehachse 18 zueinander entgegengesetzte Anschläge 26, 28, die ohrenartig ausgebildet sind und jeweils eine stirnseitige Anschlagfläche 30, 32 zum Begrenzen einer axialen Einbauposition des Rotors 12 in dem Gehäuseabschnitt 8 aufweisen. Zur Lagesicherung des Lageabschnittes 20 an dem Gehäuseabschnitt 8 sind seitlich der Anschläge 26, 28 zwei Rastnasen 34, 36 angeordnet, die in eine entsprechende Rastvertiefung des Gehäuseabschnittes 8 eingreifen. Zur Handhabung des weist der Lageabschnitt 20 ein plattenartiger Griffelement 38 auf, der sich zwischen den Anschlägen 26, 28 erstreckt. Zur radialen Positionierung des Rotors 12 in dem Innenraum hat der Lagerabschnitt 20 einen Zylinderabschnitt 41, in deren Umfangsfläche eine Umfangsnut 40 zur Aufnahme des Dichtrings 22 eingebracht ist.

Die Drehachse 18 des Rotors 12 ist gemäß Figur 3 endseitig mit jeweils einer ringartigen Rastnut 42, 44 versehen. Die gemäß der Darstellung in Figur 3 rechte Rastnut 42 taucht in ein korrespondierendes Gegenelement des Lageabschnittes 20, ein wodurch die Drehachse 18 formschlüssig mit dem Lageabschnitt 20 verbunden ist. Die gemäß der Darstellung in Figur 3 linke Rastnut 44 wirkt mit einem auf die Drehachse 18 aufschiebbaren Sicherungsring 46 zusammen, mittels dem der Rotor 12 auf der Drehachse 18 in Axialrichtung gesichert ist. Seitlich des Rotors 12 kann jeweils eine Distanzscheibe 48, 50 zum Optimieren eines Drehverhaltens des Rotors 12 angeordnet sein. Der Sicherungsring 46 und die Distanzscheiben 48, 50 sind eisenfrei und bestehen bevorzugterweise aus einem Kunststoffmaterial oder einem Leichtmetall wie Aluminium oder Titan.

Zur Reduzierung einer axialen Baulänge des Rotors 12 kann dieser in seinem dem Lagerabschnitt 20 zugewandten Stirnseite eine zentrale Rückstufung 52 aufweisen, sodass es einen, sich von dem Zylinderabschnitt 41 erstreckenden zentralen Axialvorsprung 53 des Lageabschnitt 20 radial umgreift.

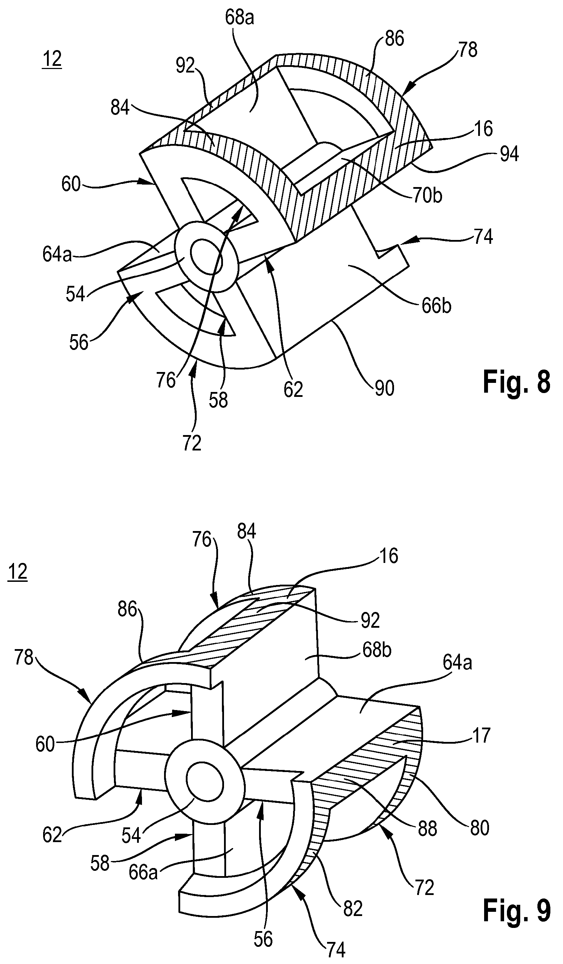

Gemäß den Figuren 8 und 9 hat der Rotor 12 eine Nabe 54 zur Lagerung auf der Drehachse 18 und zwei diametral zueinander angeordnete Flügelpaare, die jeweils zwei Flügel 56, 58 und 60, 62 aufweisen. Der Rotor 12 ist somit als ein Flügelrad ausgebildet. Er ist in dem hier gezeigten Ausführungsbeispiel ein einteiliges Spritzgussteil aus einem Kunststoff und besteht somit aus einem elektrisch isolierenden Material. Selbstverständlich kann der Rotor 12 auch aus einem elektrisch leitfähigen Material bestehen und beispielsweise ein Aluminiumgussteil sein. Erfindungsgemäß ist der Rotor 12 dauermagnetfrei.

Die Flügel 56, 58 und 60, 62 haben jeweils zwei parallele ebene Flügelflächen 64a und 66a, 66b und 68a, 68b und 70a, 70b. Aufgrund der gewählten Perspektive in den Figuren 6 und 7 ist eine Flügelfläche 66b des Flügels 56 nicht zu erkennen und somit nicht beziffert. Sie liegt jedoch in Umfangsrichtung betrachtet der Flügelfläche 66a gegenüber. Die Flügel 56, 58 und 60, 62 sind jeweils über zwei endseitige Ringbögen 72, 74 und 76, 78 paarweise miteinander verbunden. Die Ringbögen 72, 74 und 76, 78 sind somit spitzenseitig des Rotors 12 angeordnet, wobei die Ringbögen 72, 74 und 76, 78 eines Flügelpaares in Richtung der Drehachse 18 bzw. in Axialrichtung voneinander beabstandet sind.

Eine jeweils auf die Drehachse 18 bezogen radial äußere Bogenfläche 80, 82, 84, 86 der Ringbögen 72, 74 und 76, 78 sowie radial äußere Außenkanten 88, 90 und 92, 94 der Flügel 56, 58 und 60, 62 bilden zusammen jeweils die hier schraffiert angedeuteten Wirkflächen 16, 17 der Flügelpaare. Somit hat der hier gezeigte Rotor 12 zwei voneinander abgewandte radial äußere und insbesondere ringartige Wirkflächen 16, 17, wobei die Flächen 80, 88, 82, 90 die Wirkfläche 16 und die Flächen 84, 92, 86, 94 die Wirkfläche 17 bilden. Die Wirkflächen 16, 17 sind elektrisch leitende und lebensmittelechte Beschichtungen, beispielsweise Kupferbeschichtungen. Die Beschichtungen können beispielsweise galvanisch, aufgedampft, bedruckt und dergleichen aufgetragen werden. Die Wirkflächen 16, 17 sind bezogen auf die Drehachse 18 radiale Außenumfangsflächen des Rotors 12 und bei einer Umdrehung abwechselnd in einem minimalen Radialabstand a von der Sensoreinrichtung 14 positioniert (Figur 1). Der Radialabstand a entspricht etwa der in etwa einer Wandstärke des Gehäuseabschnittes 8 im Bereich der Oberfläche 24 zuzüglich eines Spitzenspaltes, um ein Schleifen der Flügel 56, 58 und 60, 62 entlang des Gehäuseabschnitts 8 zu verhindern. Wenn der Rotor 12 aus einem Leichtmetallmaterial besteht, wirkt der gesamte Rotor 12 als Wirkfläche.

Die Wirkflächen 16, 17 dienen ausschließlich zum Zusammenwirken mit der Sensoreinrichtung 1, wohingegen die Flügelflächen ausschließlich zum Antreiben des Rotors 12 dienen. Somit erfüllen die Wirkflächen 16, 17 und die Flügelflächen 64a und 66a, 66b und 68a, 68b und 70a, 70b unterschiedliche Funktionen und können auf diese jeweils optimal eingestellt werden.

Wenn nun aufgrund einer Wasserströmung in dem Leitungsabschnitt 1 der Rotor 12 in Rotation versetzt wird und der Schwingkreis Sensoreinrichtung 14 bestromt ist, werden in den Wirkflächen 16, 17 jeweils Wirbelströme induziert, die zu einer Dämpfung des Schwingkreises der Sensoreinrichtung führen. Die Dämpfung resultiert in einem Leistungsabfall, der von der Elektronik der Sensoreinrichtung 14 erfasst und ausgewertet wird. Je nach der benötigten Zusatzleistung zum Ausgleich der Dämpfung bzw. je nach dem Dämpfungsgrad ermittelt so die Elektronik den jeweiligen Volumenstrom des Wassers.

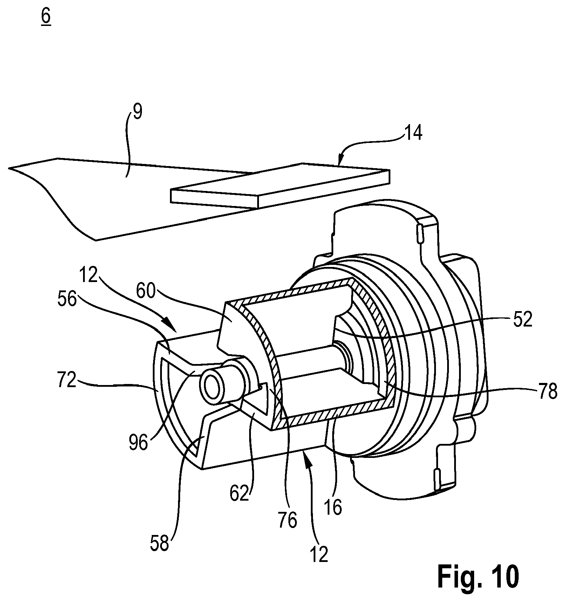

Bei dem in Figur 10 gezeigten zweiten Ausführungsbeispiel des erfindungsgemäßen Durchflussmessers 6 ist der Rotor 12 nicht nur lagerabschnittseitig mit einer zentralen Rückstufung 52 versehen, sondern ebenfalls sicherungsringseitig. Die sicherungsringseitige Rückstufung 96 ermöglicht ein Eintauchen des Sicherungsringes 46 zwischen die Flügelpaare bzw. die Flügel 56, 58 und 60, 62, wodurch diese entweder in Richtung ihrer Drehachse 18 verlängert werden können oder die Drehachse 18 reduziert werden kann. Die sonstigen Elemente wie Sensoreinrichtung 14 mit Schwingkreis, Ringbögen 72, 74 und 76, 78 und Wirkflächen 16, 17 sind gleich den vorhergehenden Ausführungsbeispielen nach den Figuren 1 bis 9. Der Ringbogen 74 ist aufgrund der Perspektive in Figur 10 nicht zu erkennen.

Offenbart ist ein Durchflussmesser 6 eines wasserführenden Haushaltsgeräts 2 zum Messen eines Fluiddurchflusses in einer Fluidleitung, mit zumindest abschnittsweise einen in der Fluidleitung anordbaren Rotor 12 und eine außerhalb der Fluidleitung anordbaren Sensoreinrichtung 14 zum Erfassen einer Drehbewegung einer Wirkfläche 16, 17 des Rotors 12, wobei die Sensoreinrichtung 14 zumindest einen Schwingkreis aufweist, der auf einer Hauptelektronikplatine 9 des wasserführenden Haushaltsgeräts 2 angeordnet ist und wobei der Rotor 12 nicht-magnetisch ausgeführt ist und zumindest eine elektrisch leitfähige Wirkfläche 16, 17 aufweist. Weiterhin ist ein Rotor 12 für einen derartigen Durchflussmesser 6, sowie ein wasserführendes Haushaltsgerät 2 offenbart.

### Bezugszeichenliste

- 1: Leitungsabschnitt
- 2: wasserführendes Haushaltsgerät
- 4: Anschlussstück
- 6: Durchflussmesser
- 8: Gehäuseabschnitt
- 9: Hauptelektronikplatine
- 10: Öffnung
- 12: Rotor
- 14: Sensoreinrichtung
- 16: Wirkfläche
- 17: Wirkfläche
- 18: Drehachse
- 20: Lagerabschnitt
- 22: Dichtring
- 24: Oberfläche
- 26: Anschlag
- 28: Anschlag
- 30: Anschlagfläche
- 32: Anschlagfläche
- 34: Rastnase
- 36: Rastnase
- 38: Griffelement
- 40: Umfangsnut
- 41: Zylinderabschnitt
- 42: Rastnut
- 44: Rastnut
- 46: Sicherungsring
- 48: Distanzscheibe
- 50: Distanzscheibe
- 52: Rückstufung
- 53: Axialvorsprung
- 54: Nabe
- 56: Flügel
- 58: Flügel
- 60: Flügel
- 62: Flügel
- 64a, b: Flügelfläche
- 66a, b: Flügelfläche
- 68a, b: Flügelfläche
- 70a, b: Flügelfläche
- 72: Ringbogen
- 74: Ringbogen
- 76: Ringbogen
- 78: Ringbogen
- 80: Bogenfläche
- 82: Bogenfläche
- 84: Bogenfläche
- 86: Bogenfläche
- 88: Außenkanten
- 90: Außenkanten
- 92: Außenkanten
- 94: Außenkanten
- 96: Rückstufung

- a: Radialabstand

## Patentansprüche

1. Durchflussmesser (6) eines wasserführenden Haushaltsgeräts (2) zum Messen eines Fluiddurchflusses in einer Fluidleitung, mit einem zumindest abschnittsweise in der Fluidleitung anordbaren Rotor (12) und mit einer außerhalb der Fluidleitung anordbaren Sensoreinrichtung (14) zum Erfassen einer Drehbewegung zumindest einer Wirkfläche des Rotors (16, 17),
**dadurch gekennzeichnet, dass**
die Sensoreinrichtung (14) zumindest einen Schwingkreis aufweist, der auf einer Hauptelektronikplatine (9) des wasserführenden Haushaltsgeräts (2) angeordnet ist, der Rotor (12) nicht-magnetisch ausgeführt ist und zumindest eine elektrisch leitfähige Wirkfläche (16, 17) aufweist.

2. Durchflussmesser nach Anspruch 1, wobei der Rotor (12) aus einem elektrisch isolierenden Material besteht und die zumindest eine Wirkfläche (16, 17) eine elektrisch leitende Beschichtung des Rotors (12) ist.

3. Durchflussmesser nach Anspruch 1, wobei der Rotor (12) aus einem elektrisch leitenden Material besteht.

4. Durchflussmesser nach Anspruch 1, 2 oder 3, wobei die zumindest eine Wirkfläche (16, 17) bezogen auf die Drehachse (18) radial außen angeordnet ist.

5. Durchflussmesser nach einem der vorhergehenden Ansprüche, wobei der Rotor (12) zumindest zwei diametral angeordnete Flügelpaare aufweist, deren jeweils zwei Flügel (56, 58, 60, 62) über zumindest einen Ringbogen (72, 74, 76, 78) miteinander verbunden sind, der einen Bereich jeweils einer Wirkfläche (16, 17) bildet.

6. Durchflussmesser nach Anspruch 5, wobei die Flügel (56, 58, 60, 62) jedes Flügelpaares endseitig über jeweils zwei Ringbögen (72, 74, 76, 78) miteinander verbunden sind und jedes Flügelpaar eine Wirkfläche (16, 17) aufweist, die sich jeweils über die zwei Ringbögen (72, 74, 76, 78) und Außenkanten der Flügel (56, 58, 60, 62) erstreckt.

7. Durchflussmesser nach Anspruch 5 oder 6, wobei die Flügel (56, 58, 60, 62) jeweils zwei voneinander abgewandte parallele Flügelflächen (64a, 66a, 66b, 68a, 68b, 70a, 70b) haben.

8. Rotor (12) für einen Durchflussmesser (6) nach einem der vorhergehenden Ansprüche.

9. Wasserführendes Haushaltsgerät (2) mit einer Hauptelektronikplatine (9) und mit einem Durchflussmesser (6) nach einem der Ansprüche 1 bis 8.
